# EUROPEAN PATENT SPECIFICATION

(11) **EP 2 913 865 B1**
(45) Date of publication and mention of the grant of the patent: **30.08.2017**
(21) Application number: 14851406.0
(22) Date of filing: 03.12.2014
(51) Int. Cl.: H01M 2/18, H01M 2/02, H01M 10/04

(54) **STEPPED BATTERY, AND METHOD AND APPARATUS FOR MANUFACTURING SAME**
GESTUFTE BATTERIE SOWIE VERFAHREN UND VORRICHTUNG ZUR HERSTELLUNG DAVON
BATTERIE ÉTAGÉE, ET PROCÉDÉ ET APPAREIL POUR LA FABRIQUER

(30) Priority: 06.01.2014 KR 20140001295; 25.08.2014 KR 20140110759
(43) Date of publication of application: 02.09.2015
(73) Proprietor: Lg Chem, Ltd., Seoul 150-721 (KR)
(72) Inventor: KIM, Young Hoon, Daejeon 305-380 (KR); KWON, Sung Jin, Daejeon 305-380 (KR); KIM, Dong Myung, Daejeon 305-380 (KR); KIM, Ki Woong, Daejeon 305-380 (KR)
(74) Representative: Cabinet Plasseraud
(86) International application number: PCT/KR2014/011746
(87) International publication number: WO 2015/102242

(56) References cited:
- EP-A1- 2 858 163
- EP-A1- 2 874 224
- JP-A- 2012 209 124
- JP-A- 2012 221 828
- KR-A- 20030 020 464
- KR-A- 20130 113 366
- KR-A- 20130 135 204

## Description

### TECHNICAL FIELD

The present invention relates to a stepped battery and a method and device for manufacturing the stepped battery, and more particularly, to a stepped battery and a method and device for manufacturing the stepped battery, which processes a tent part of a separation film formed on a stepped part of the stepped battery, to prevent a defect from occurring during a subsequent process.

### BACKGROUND ART

As recent electronic products are miniaturized and slimmed into various shapes, conventional rectangular parallelepiped batteries are inappropriate to efficiently use inner spaces of miniaturized and slimmed electronic products.

Thus, batteries having various shapes, such as stepped batteries, are manufactured to correspond to the shapes of battery accommodating spaces in electronic products.

Stepped batteries are formed by sequentially stacking cells, having various sizes and shapes, into a desired shape. A technology of forming a stepped battery in a stack and folding manner is disclosed (refer to Korean Patent Publication No. 2013-106781).

Although such technologies of manufacturing a stepped battery by stacking cells in a folding manner are significantly convenient and advantageous in a manufacturing process, a tent shape formed by a separation film after the manufacturing process is an issue that should be addressed.

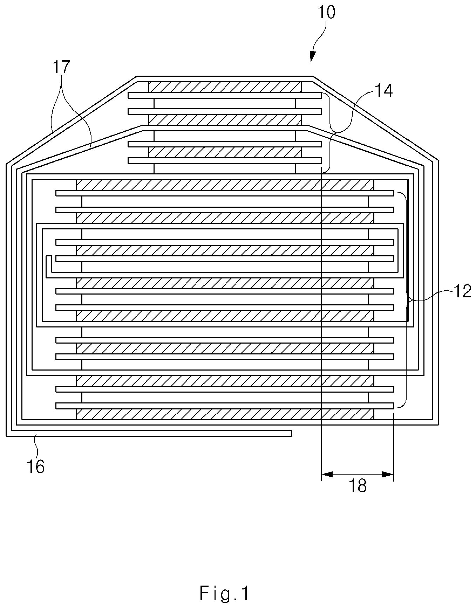

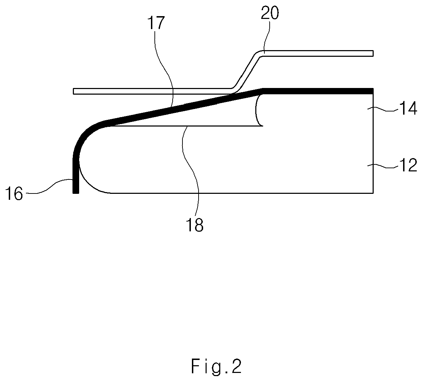

FIG. 1 is a side view illustrating a stepped battery 10 formed in a stack and folding manner. FIG. 2 is a side view illustrating a process of accommodating the stepped battery of FIG. 1 in a pouch.

Referring to FIGS. 1 and 2, a first bi-cell (a radical unit), which is constituted by a cathode, a separator, an anode, a separator, and a cathode, and a second bi-cell (a radical unit) which is constituted by an anode, a separator, a cathode, a separator, and an anode are stacked and folded using a separation film 16 for a folding operation, thereby forming the stepped battery 10. When a stepped battery is manufactured in a stack and folding manner, small cells 14 are stacked on large cells 12 to form stepped surfaces 18 between the small cells 14 and the large cells 12, thereby forming tent shapes on the separation film 16, as illustrated in FIGS. 1 and 2... The stepped surfaces 18 may be surfaces that form stepped parts caused by a difference in size between the small cells 14 and the large cells 12.

When a tent portion of the separation film 16 is accommodated in a pouch 20 having a step shape needed for the stepped battery 10 as illustrated in FIG. 2, the tent portion interferes with the pouch 20 so as to break the separation film 16 or push the separation film 16, thereby moving stacked electrodes, which causes an additional defect. Prior art stepped batteries and their manufacturing methods are further known e.g. from KR 2013 0135204, JP 2012 221828 or KR 2013 0113366.

### DISCLOSURE OF THE INVENTION

### TECHNICAL PROBLEM

Accordingly, the present invention aims at providing a stepped battery and a method and device for manufacturing the stepped battery, in which: a tent portion of a separation film formed over a stepped surface of the stepped battery formed through a stack and folding process is processed to correspond to a stepped part of a pouch having a predetermined desired shape, thereby preventing the tent portion of the separation film from significantly interfering with a side wall of the pouch in a packaging process for an electrode assembly, so that the tent portion does not affect the electrode assembly; and the pouch supports an end of a stepped part of the stepped battery to prevent a movement of the electrode assembly accommodated in the pouch.

### TECHNICAL SOLUTION

The prior art problems are solved by the stepped battery and its manufacturing method according to the invention as defined in indepdendent claims 1 and 3.

### ADVANTAGEOUS EFFECTS

According to the present invention, a tent-shaped portion of a stepped battery is attached to a stepped part and is thus removed, thereby preventing a defect that would otherwise occur during a subsequent process.

In addition, an electrode assembly of a stepped battery is formed into a shape corresponding to the shape of a pouch, thereby preventing the pouch from interfering with a tent part.

In addition, when a tent shape of a stepped battery is attached, a separation film is prevented from being damaged, thereby preventing a defect that would otherwise occur during a main process.

In addition, a tent portion of a stepped battery is pressed while or after the upper end of the stepped battery is pressed, thereby preventing an alignment defect in a small cell area which would otherwise occur while the pressing of the tent portion.

In addition, a tent-shaped portion is processed during a hot press process after a folding process for a stepped battery, thereby reducing the number of processes.

The above described effects and specified effects of the present invention are also described in the following mode for carrying out the present invention.

### BRIEF DESCRIPTION OF THE DRAWINGS

FIG. 1 is a side view illustrating a stepped battery formed in a stack and folding manner;
FIG. 2 is a side view illustrating a process of accommodating the stepped battery of FIG. 1 in a pouch;
FIG. 3 is a side view illustrating an operation state of a press tool that processes a tent portion formed on a stepped part of a stepped battery, in a stepped battery manufacturing method according to an embodiment of the present invention;
FIG. 4 is a side view illustrating the stepped battery after the press tool of FIG. 3 processes the stepped battery;
FIG. 5 is a side view illustrating the stepped battery when the press tool of FIG. 3 attaches a separator surplus part to a portion of a stepped surface; and
FIG. 6 is a side view illustrating an operation state of an upper jig and a press tool, which process a tent portion formed on a stepped surface of a stepped battery, in a stepped battery manufacturing method according to another embodiment of the present invention.

### MODE FOR CARRYING OUT THE INVENTION

Embodiments of the present invention will be described in detail with reference to the accompanying drawings.

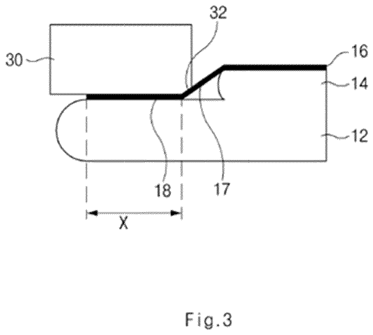

FIG. 1 is a side view illustrating a stepped battery formed in a stack and folding manner. FIG. 2 is a side view illustrating a process of accommodating the stepped battery of FIG. 1 in a pouch. FIG. 3 is a side view illustrating an operation state of a press tool that processes a tent portion formed on a stepped part of a stepped battery, in a stepped battery manufacturing method according to an embodiment of the present invention.

Referring to FIGS. 1 to 3, a stepped battery manufacturing method according to an embodiment of the present invention will now be described. A stepped battery 10 described according to the current embodiment may be formed in a stack and folding manner.

The stack and folding manner may be a method in which a first bi-cell (a radical unit) and a second bi-cell (a radical unit), which are formed by stacking electrodes and separators, are stacked and folded using a separation film 16 for a folding operation.

However, a method of manufacturing the stepped battery 10 is not limited thereto, and thus, various methods can be used. For example, the stepped battery 10 may be formed by attaching separate electrodes to the separation film 16 and folding the separation film 16. In this case, the separation film 16 may be located between the separate electrodes.

After a folding process is completed, the stepped battery 10 undergoes a process of aligning and fixing the radical units by a hot press jig and is then aligned with a predetermined location of a lower jig (not shown) and is placed therein. At this point, the stepped battery 10 has one or more stepped surfaces 18 that are covered with the separation film 16. In this case, separator surplus parts 17 may be portions of the separation film 16 which cover the stepped surfaces 18. The separator surplus parts 17 may have a tense tent shape by tension generated during the folding process.

Tent portions of the separator surplus parts 17 may be pressed against the stepped battery 10 placed and prepared in position on the lower jig. At this point, a press tool 30 may be used. The press tool 30 has a shape corresponding to the stepped surfaces 18 of the stepped battery 10 placed on the lower jig, and moves downward to the lower jig to press the tent portions of the separator surplus parts 17.

A hot press tool formed by heating the press tool 30 to a high temperature may press the tent portions of the separator surplus parts 17. At this point, the hot press tool moves downward to press a tent shape part of the separation film 16 formed on a stepped part 18 between a large cell 12 and a small cell 14. Accordingly, the separator surplus part 17 is attached onto the stepped part 18 by heat.

After that, a large portion of the tent shape part of the separation film 16 is removed (refer to FIGS. 2 and 3). After pressing the tent portions, the press tool 30 may move upward from the lower jig and return to an original location thereof.

At this point, a contact area X between the press tool 30 and the stepped surface 18 is greater than an area of a horizontal portion of a stepped surface of a pouch 20 that packages the stepped battery 10. Accordingly, while the stepped battery 10 is accommodated in the pouch 20, the pouch 20 and a tent portion of the separation film 16 may be prevented from interfering with each other.

The press tool 30 may have a lower edge that contacts at least the separation film 16 and that may be provided with a chamfer 32. When the press tool 30 pressing the tent portion of the separation film 16 has a sharp edge, the sharp edge may damage the separation film 16 to which tensile force is applied. Thus, the chamfer 32 prevents strong pressure from being applied to a portion of the separation film 16, and a slope surface of the separation film 16 is naturally formed at a forming angle of the chamfer 32.

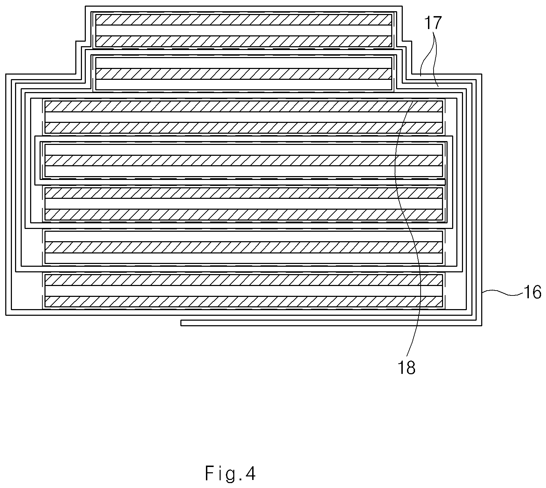

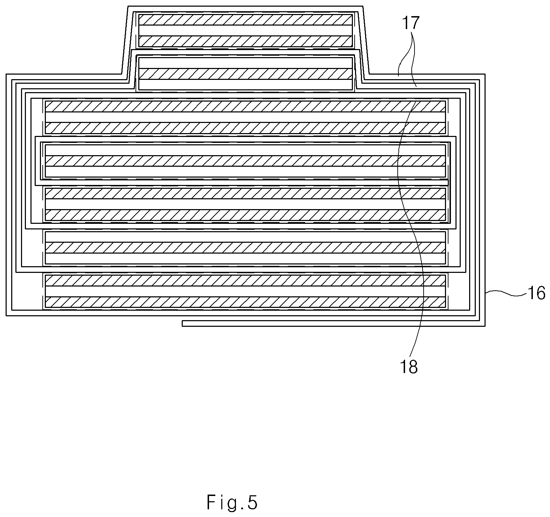

FIG. 4 is a side view illustrating the stepped battery after the press tool of FIG. 3 processes the stepped battery. FIG. 5 is a side view illustrating the stepped battery when the press tool of FIG. 3 attaches a separator surplus part to a portion of a stepped surface.

Referring to FIG. 4, a portion of the separation film 16 on the stepped surface 18 is completely vertical and is attached to a side surface of a small cell. In this case, the separator surplus part 17 is completely attached to the whole of the stepped surface 18. However, the separator surplus part 17 may be incompletely attached to the whole of the stepped surface 18. The separator surplus part 17 may be formed at a steep angle as illustrated in FIG. 3 or 5.

Referring to FIG. 5, the separator surplus part 17 is attached to a portion of the stepped surface 18. Even in this case, a pouch and the separation film 16 may be prevented from interfering with each other. Thus, this case is also within the scope of the present invention.

As such, only a portion of the separator surplus part 17 may be attached to the stepped surface 18. Whether the separator surplus part 17 is attached to a portion of the stepped surface 18 or the whole thereof may be determined according to a condition of a press process or a shape of the pouch 20.

Furthermore, the separator surplus part 17 may not be attached to the stepped surface 18. Even in this case, when the tent portion of the separator surplus part 17 is pressed to step the separator surplus part 17 into a shape corresponding to the stepped surface 18, the above described effect can be achieved. That is, the separator surplus part 17 stepped into the shape corresponding to the stepped surface 18 is prevented from interfering with the pouch 20 accommodating the stepped battery 10.

The concept that the separator surplus part 17 is stepped into the shape corresponding to the stepped surface 18 may be independent from whether the separator surplus part 17 is attached to the stepped surface 18. That is, when the separator surplus part 17 is stepped into the shape corresponding to the stepped surface 18, the separator surplus part 17 may be attached to the stepped surface 18 or may not be attached thereto.

In addition, the concept that the separator surplus part 17 is stepped into the shape corresponding to the stepped surface 18 may include the shapes illustrated in FIGS. 4 and 5.

The shape illustrated in FIG. 4 in which the separator surplus part 17 is completely attached to the whole of the stepped surface 18 to correspond thereto is obviously included in the concept that the separator surplus part 17 is stepped into the shape corresponding to the stepped surface 18. Furthermore, even when the separator surplus part 17 is formed at the steep angle as illustrated in FIG. 5, the tent portion of the separator surplus part 17 is significantly reduced to sufficiently achieve the above described effect. Thus, the separator surplus part 17 substantially has a shape corresponding to the stepped surface 18.

Even though a separator surplus part has a shape incompletely corresponding to the shape of a stepped surface, when the shape of the separator surplus part substantially corresponds to the shape of the stepped surface according to a degree of the effect, a limitation of a tool, or a limitation of a process, the shape of the separator surplus part may be included in the concept that a separator surplus part has a shape corresponding to a stepped surface.

Referring to FIGS. 4 and 5, portions of the separation film 16 pressed and attached to the stepped surface 18 by the press tool 30 are spaced apart from each other. Although portions of a separation film pressed and attached to the stepped surface 18 by the press tool 30 are generally attached to each other, the portions may be spaced a predetermined distance from each other as illustrated in FIG. 4 or 5. The case that the portions are spaced a predetermined distance from each other, and the case that the portions are attached to each other are within the scope of the present invention, provided that the tent portion of the separator surplus part 17 is pressed and thus does not interfere with the pouch 20.

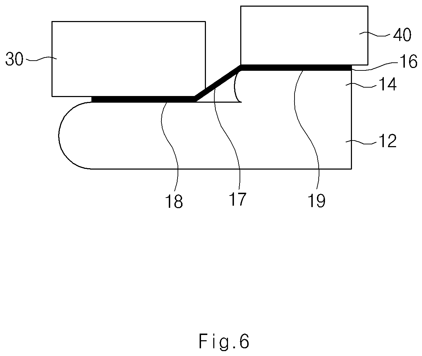

FIG. 6 is a side view illustrating an operation state of an upper jig and a press tool, which process a tent portion formed on a stepped surface of a stepped battery, in a stepped battery manufacturing method according to another embodiment of the present invention.

Referring to FIG. 6, a stepped battery manufacturing method according to the current embodiment may further include pressing an upper end surface 19 of the stepped battery 10 by an upper jig 40. The upper jig 40 may be installed over the lower jig (not shown) and may press the upper end surface 19 of the stepped battery 10. At this point, the separation film 16 pressed by the upper jig 40 may be attached to the upper end surface 19 of the stepped battery 10.

Specifically, the lower jig and the upper jig 40 are hot press jigs, and the stepped battery 10 may be promptly placed on the lower jig after a folding process, and then, undergo a hot press process for fixing the stepped battery 10. That is, after the folding process is completed, the stepped battery 10 may be promptly aligned with a predetermined location of the lower jig and be placed therein, without undergoing a separate hot press process (but, even when a separate hot press process is previously performed on the stepped battery 10, the stepped battery 10 may be processed according to the current embodiment). Then, the upper jig 40 and the press tool 30 installed over the stepped battery 10 placed in position may move downward to press the upper end surface 19 corresponding to the small cell 14 and perform an attaching and fixing operation on the stepped battery 10, and to press the tent shape part of the separation film 16 formed on the stepped surface 18 between the large cell 12 and the small cell 14 such that the tent shape part is attached and fixed onto the stepped surface 18 by heat.

As such, when the upper jig 40 and the press tool 30 are simultaneously operated, the upper jig 40 and the press tool 30 may be integrally formed to be integrally operated. In this configuration, the press tool 30 receives heat transferred from the upper jig 40 configured as a hot press jig, to heat and press the tent portion of the separation film 16, without employing a separate heating configuration (but, a separate heating part may be provided to the press tool 30).

Also in this configuration, the upper jig 40 may press the upper end surface 19 of the stepped battery 10, and simultaneously, the press tool 30 may press the stepped surface 18. Thus, the hot press process and a process of removing a tent shape from the separation film 16 may be simultaneously performed in a single process.

Alternatively, the upper jig 40 and the press tool 30 may be individually configured to be individually operated. Specifically in this configuration, the upper jig 40 may press the upper end surface 19 of the stepped battery 10, and then, the press tool 30 may press the stepped surface 18.

In this case, the press tool 30 presses the tent portion, so as to press the separation film 16, thereby more reliably preventing the small cell 14 from moving out of a proper location thereof. In addition, the hot press process and the process of removing the tent shape from the separation film 16 may be performed in a single process.

Each of configurations according to the present invention can be appropriately modified, provided that the function of the configuration is not sacrificed. In addition, each configuration is not limited to the embodiments set forth herein and is freely changed within the scope of the present invention as defined by the following claims.

## Claims

1. A stepped battery (10) in a stepped pouch (20) comprising a stepped battery (10) and a stepped pouch packaging the stepped battery,
wherein the stepped battery (140) has a larger cell (12), a smaller cell (14), at least one stepped surface (18) extending from the larger cell (12) to the smaller cell (14), a separation film (16) with a separator surplus part (17) covering the stepped surface (18),
wherein the separator surplus part (17) is attached to the stepped surface (18), and **characterized in that** a contact area (X) between the separator surplus part (17) and the portion of the stepped surface (18) covering the larger cell (12) is greater than an area of a horizontal portion of a stepped surface of the pouch (20) covering the portion of the stepped surface (18) covering the larger cell (12).

2. The stepped battery (10) of claim 1, wherein the separator surplus part (17) is attached to a portion of the stepped surface (18).

3. A manufacturing method of a stepped battery (10) in a pouch (20) according to claim 1, said manufacturing method comprising:
Preparing a stepped battery (10) having a larger cell (12), a smaller cell (14), at least one stepped surface (18) extending from the larger cell (12) to the smaller cell (14), a separation film (16), wherein the separation film (16) has tent portion formed on at least one stepped surface (18); and
pressing the tent portion by using a press tool (30) having a shape corresponding to the stepped surface (18) of the stepped battery (10),
packaging the stepped battery (10) in the stepped pouch (20) thus obtaining the stepped battery (10) in a stepped pouch (20);
**characterized in that** a contact area (X) between the press tool (30) and the stepped surface (18) is greater than an area of a horizontal portion of a stepped surface of the pouch (20) corresponding to the tent portion before pressing.

4. The manufacturing method of claim 3, wherein the press tool (30) comprises a hot press tool having a higher temperature than that of the tent portion and the stepped surface (18).

5. The manufacturing method of claim 3, wherein the tent portion is attached to the stepped surface (18) by pressing the tent portion in the pressing of the tent portion.

6. The manufacturing method of claim 3, wherein the stepped battery (10) is formed in a stack and folding manner.

7. The manufacturing method of claim 3, wherein the stepped battery (10) is formed by attaching separate electrodes to the separation film and folding the separation film.

8. The manufacturing method of claim 3, wherein the press tool (30) has a lower edge that contacts the separation film (16) and that is provided with a chamfer (32).

9. The manufacturing method of claim 3, further comprising pressing an upper end surface (19) of the stepped battery (10) by an upper jig (40).

10. The manufacturing method of claim 9, wherein while the upper jig (40) presses the upper end surface (19) of the stepped battery (10), the press tool (30) presses the stepped surface (18).

11. The manufacturing method of claim 9, wherein after the upper jig (40) presses the upper end surface (19) of the stepped battery (10), the press tool (30) presses the stepped surface (18).

## Patentansprüche

1. Gestufte Batterie (10) in einer gestuften Tasche (20), umfassend eine gestufte Batterie (10) und eine gestufte Tasche, welche die gestufte Batterie verpackt,
wobei die gestufte Batterie (140) aufweist: eine größere Zelle (12), eine kleinere Zelle (14), mindestens eine gestufte Oberfläche (18), welche sich von der größeren Zelle (12) zu der kleineren Zelle (14) erstreckt, eine Separationsfolie (16) mit einem Separator-Überschussteil (17), welcher die gestufte Oberfläche (18) bedeckt,
wobei das Separator-Überschussteil (17) an der gestuften Oberfläche (18) angebracht ist, und **dadurch gekennzeichnet, dass** eine Kontaktfläche (X) zwischen dem Separator-Überschussteil (17) und dem Abschnitt der gestuften Oberfläche (18), welcher die größere Zelle (12) bedeckt, größer als eine Fläche eines horizontalen Abschnitts einer gestuften Oberfläche der Tasche (20) ist, welcher den Abschnitt der gestuften Oberfläche (18) bedeckt, welcher die größere Zelle (12) bedeckt.

2. Gestufte Batterie (10) nach Anspruch 1, wobei das Separator-Überschussteil (17) an einem Abschnitt der gestuften Oberfläche (18) angebracht ist.

3. Herstellungsverfahren einer gestuften Batterie (10) in einer Tasche (20) nach Anspruch 1, wobei das Herstellungsverfahren umfasst:
Vorbereiten einer gestuften Batterie (10), aufweisend: eine größere Zelle (12), eine kleinere Zelle (14), mindestens eine gestufte Oberfläche (18), welche sich von der größeren Zelle (12) zu der kleineren Zelle (14) erstreckt, eine Separationsfolie (16), wobei die Separationsfolie (16) einen Zeltabschnitt aufweist, welcher an mindestens einer gestuften Oberfläche (18) ausgebildet ist; und
Pressen des Zeltabschnitts unter Verwendung eines Presswerkzeugs (30), welches eine Gestalt aufweist, die der gestuften Oberfläche (18) der gestuften Batterie (10) entspricht,
Verpacken der gestuften Batterie (10) in der gestuften Tasche (20), wodurch eine gestufte Batterie (10) in einer gestuften Tasche (20) erhalten wird;
**dadurch gekennzeichnet, dass** eine Kontaktfläche (X) zwischen dem Presswerkzeug (30) und der gestuften Oberfläche (18) größer als eine Fläche eines horizontalen Abschnitts einer gestuften Oberfläche der Tasche (20) ist, welche dem Zeltabschnitt vor dem Pressen entspricht.

4. Herstellungsverfahren nach Anspruch 3, wobei das Presswerkzeug (30) ein Heißpresswerkzeug umfasst, welches eine höhere Temperatur als diejenige des Zeltabschnitts und der gestuften Oberfläche (18) aufweist.

5. Herstellungsverfahren nach Anspruch 3, wobei der Zeltabschnitt an der gestuften Oberfläche (18) durch Pressen des Zeltabschnitts in dem Pressen des Zeltabschnitts angebracht wird.

6. Herstellungsverfahren nach Anspruch 3, wobei die gestufte Batterie (10) in einer Stapel- und Falt-Weise ausgebildet wird.

7. Herstellungsverfahren nach Anspruch 3, wobei die gestufte Batterie (10) durch Anbringen separater Elektroden an der Separationsfolie und durch Falten der Separationsfolie ausgebildet wird.

8. Herstellungsverfahren nach Anspruch 3, wobei das Presswerkzeug (30) einen unteren Rand aufweist, welcher die Separationsfolie (16) berührt und welcher mit einer Fase (32) versehen ist.

9. Herstellungsverfahren nach Anspruch 3, ferner umfassend Pressen einer oberen Endfläche (19) der gestuften Batterie (10) durch eine obere Aufnahme (40).

10. Herstellungsverfahren nach Anspruch 9, wobei, während die obere Aufnahme (40) die obere Endfläche (19) der gestuften Batterie (10) presst, dass Presswerkzeug (30) die gestufte Oberfläche (18) presst.

11. Herstellungsverfahren nach Anspruch 9, wobei nachdem die obere Aufnahme (40) die obere Endfläche (19) der gestuften Batterie presst, das Presswerkzeug die gestufte Oberfläche (18) presst.

## Revendications

1. Batterie étagée (10) dans un étui étagé (20) comprenant une batterie étagée (10) et un étui étagé emballant la batterie étagée,
dans laquelle la batterie étagée (140) a une cellule plus grande (12), une cellule plus petite (14), au moins une surface étagée (18) s'étendant de la cellule plus grande (12) à la cellule plus petite (14), un film de séparation (16) avec une partie d'excédent de séparateur (17) couvrant la surface étagée (18),
dans laquelle la partie d'excédent de séparateur (17) est fixée à la surface étagée (18), et
**caractérisée en ce qu'**une zone de contact (X) entre la partie d'excédent de séparateur (17) et la portion de la surface étagée (18) couvrant la cellule plus grande (12) est supérieure à une zone d'une portion horizontale d'une surface étagée de l'étui (20) couvrant la portion de la surface étagée (18) couvrant la cellule plus grande (12).

2. Batterie étagée (10) selon la revendication 1, dans laquelle la partie d'excédent de séparateur (17) est fixée à une portion de la surface étagée (18).

3. Procédé de fabrication d'une batterie étagée (10) dans un étui (20) selon la revendication 1, ledit procédé de fabrication comprenant :
la préparation d'une batterie étagée (10) ayant une cellule plus grande (12), une cellule plus petite (14), au moins une surface étagée (18) s'étendant de la cellule plus grande (12) à la cellule plus petite (14), un film de séparation (16), dans lequel le film de séparation (16) a une portion de tente formée sur au moins une surface étagée (18); et
le pressage de la portion de tente en utilisant un outil de presse (30) ayant une forme correspondant à la surface étagée (18) de la batterie étagée (10),
l'emballage de la batterie étagée (10) dans l'étui étagé (20) obtenant ainsi la batterie étagée (10) dans un étui étagé (20) ;
**caractérisé en ce qu'**une zone de contact (X) entre l'outil de presse (30) et la surface étagée (18) est supérieure à une zone d'une portion horizontale d'une surface étagée de l'étui (20) correspondant à la portion de tente avant pressage.

4. Procédé de fabrication selon la revendication 3, dans lequel l'outil de presse (30) comprend un outil de presse chaud ayant une température plus élevée que celle de la portion de tente et de la surface étagée (18).

5. Procédé de fabrication selon la revendication 3, dans lequel la portion de tente est fixée à la surface étagée (18) en pressant la portion de tente lors du pressage de la portion de tente.

6. Procédé de fabrication selon la revendication 3, dans lequel la batterie étagée (10) est formée en empilage et pliage.

7. Procédé de fabrication selon la revendication 3, dans lequel la batterie étagée (10) est formée en fixant des électrodes séparées au film de séparation et en pliant le film de séparation.

8. Procédé de fabrication selon la revendication 3, dans lequel l'outil de presse (30) a un bord inférieur qui entre en contact avec le film de séparation (16) et qui est pourvu d'un chanfrein (32).

9. Procédé de fabrication selon la revendication 3, comprenant en outre le pressage d'une surface d'extrémité supérieure (19) de la batterie étagée (10) par un gabarit supérieur (40).

10. Procédé de fabrication selon la revendication 9, dans lequel, tandis que le gabarit supérieur (40) presse la surface d'extrémité supérieure (19) de la batterie étagée (10), l'outil de presse (30) presse la surface étagée (18).

11. Procédé de fabrication selon la revendication 9, dans lequel, après que le gabarit supérieur (40) presse la surface d'extrémité supérieure (19) de la batterie étagée (10), l'outil de presse (30) presse la surface étagée (18).
